# EUROPEAN PATENT APPLICATION

(11) **EP 2 043 347 A1**
(43) Date of publication of application: **01.04.2009**
(21) Application number: 07291142.3
(22) Date of filing: 26.09.2007
(51) Int. Cl.: H04M 3/54, H04M 7/00, H04L 29/06, H04M 3/56

(54) **Method of providing an improved call forwarding service**

(71) Applicant: Alcatel Lucent, 75008 Paris (FR)
(72) Inventor: Litteaut, Jacques, 78160 Marly le Roi (FR); Coulon, Stéphane, 95810 Arronville (FR); Rey, Jean-Francois, 29200 Brest (FR)
(74) Representative: Zinsinger, Norbert

(57) **Abstract**

The invention concerns a method of providing an improved call forwarding service in a telecommunications network, and a network unit and a computer program product to execute this method. A call (100), initiated by a caller (11) to a first callee (21), is forwarded (101) from the first callee (21) to a second callee (22) for set-up of a communication session (102) between the caller (11) and the second callee (22). After answering the forwarded call (101) by the second callee (22), the forwarded call (101) is analysed and data associated with the call (100) are extracted. Based on the extracted data, a notification message about the call (100) is sent to the first callee (21). A procedure is executed for offering the first callee (21) an access (103) to the communication session (102) set up between the caller (11) and the second callee (22). If the first callee (21) accepts the offered access (103) to the communication session (102), the first callee (21) is granted the access (103) to the communication session (102).

## Description

The present invention relates to a method of providing an improved call forwarding service, and a network unit and a computer program product to execute said method.

In current telecommunications systems, a user (subscriber of a telecommunications system) may activate an automatic call forwarding to a third party. The effect of this automatic call forwarding is that calls which are targeted to the user's terminal are automatically forwarded to the third party. Thus, after activation of the automatic call forwarding, the user completely loses control over the incoming calls and is not any more aware of the fate of these calls.

US 2004/0005045 A1 describes call forwarding services in an Advanced Intelligent Network (= AIN). A user connected to a communications network, including the Internet and other packet switched type data networks, is enabled to customise and execute the call forwarding services, with near real-time access to the service data. That prior art concerns only the user setting the call forwarding but does not address the case when a call is already forwarded.

It is the object of the present invention to provide an improved call forwarding.

The object of the present invention is achieved by a method of providing an improved call forwarding service in a telecommunications network, wherein a call initiated by a caller to a first callee is forwarded from the first callee to a second callee for set-up of a communication session between the caller and the second callee, whereby the method comprises the steps of analysing, after answering the forwarded call by the second callee, the forwarded call and extracting data associated with the call, sending, based on the extracted data, a notification message about the call to the first callee, executing a procedure for offering the first callee an access to the communication session set up between the caller and the second callee, and granting, if the first callee accepts the offered access to the communication session, the first callee access to the communication session. Furthermore, the object of the present invention is achieved by a network unit for providing an improved call forwarding service in a telecommunications network, wherein a call initiated by a caller to a first callee is forwarded from the first callee to a second callee for set-up of a communication session between the caller and the second callee, wherein the network unit comprises a control unit adapted to analyse, after answering the forwarded call by the second callee, the forwarded call and extract data associated with the call, send, based on the extracted data, a notification message about the call to the first callee, execute a procedure for offering the first callee an access to the communication session set up between the caller and the second callee, and grant, if the first callee accepts the offered access to the communication session, the first callee access to the communication session. And the object of the present invention is achieved by a computer program product for providing an improved call forwarding service in a telecommunications network, wherein a call initiated by a caller to a first callee is forwarded from the first callee to a second callee for set-up of a communication session between the caller and the second callee, wherein the computer program product, when executed by a network unit, performs the steps of analysing, after answering the forwarded call by the second callee, the forwarded call and extracting data associated with the call, sending, based on the extracted data, a notification message about the call to the first callee, executing a procedure for offering the first callee an access to the communication session set up between the caller and the second callee, and granting, if the first callee accepts the offered access to the communication session, the first callee access to the communication session,

Said network unit may be implemented as a stand-alone unit of the telecommunications network providing a central control of the improved call forwarding. Alternatively It is also possible that said network unit is implemented in a de-centralised way in the terminals of the subscribers to the telecommunications network. This way, the network unit is a virtual unit with a de-central real-world embodiment in the form of functions.

Generally, the invention provides the possibilities of display and intervention on a third party session.

A callee who has activated a call forwarding from his terminal to another terminal does not lose control over a communication that is set up between a caller and the other terminal. Therefore, the invention provides a callee with an improved call forwarding service.

Further advantages are achieved by the embodiments of the invention indicated by the dependent claims,

According to a preferred embodiment of the invention, the first callee, after he has expressed his interest in accessing the communication session set up between the caller and the second callee, is provided with a possibility to supervise the communication session. A network unit may provide the first callee with a connection to the communication session, so that the first callee can track the ongoing communication session, It is possible that the caller and the second callee are informed about the first callee tracking their communication, e.g. for protection of privacy. However, it is also possible that the first callee has access to the ongoing communication session without the caller and/or the second callee knowing.

According to another preferred embodiment of the invention, the first callee, after he has expressed his interest in accessing the communication session set up between the caller and the second callee, is provided with a possibility to establish a connection to the caller and/or to the second callee. For example, the first caller may track the ongoing communication session between the caller and the second callee and jump into the communication session whenever the first callee sees a need to do so. It is possible that the jump-in into the communication is done as a one-to-one communication, i.e., a consultation, with either the caller or the second callee. However, it is also possible that the first callee communicates with both the caller and the second callee simultaneously, forming a kind of conference call.

According to another preferred embodiment of the invention, the network unit extracts from a call message associated with the call an identifier of the first callee. This identifier may be a communication address (telephone number, extension number, SIP address), a name (login name, first name and/or surname), another identifier (marking, denotation, reference), etc. (SIP = Session Initiation Protocol). The call message may comprise this identifier because it was put into the call message at the set-up of the call triggered by the caller in order to address the call to the first callee. It is also possible that the identifier was added to the call message at the call forwarding of the call initiated by the first callee.

Based on the extracted identifier of the first callee, contact data associated with the first callee are provided. According to a preferred embodiment of the invention, the contact data associated with the first callee, e.g., a telephone number or a SIP address, are already contained within the call message. It is also possible that the contact data associated with the first callee are retrieved, based on the identifier of the first callee, from a data base. It is possible that the network unit refers to a address directory and looks up a telecommunication address, e.g. a telephone number, associated with the first callee on the basis of the identifier, e.g. a login name of the first callee.

The determined contact data are used as a destination address of the notification message to the first callee. Preferably, the notification message is generated by the network unit. The notification message comprises an identifier of the caller or comprises the identifier of the caller and an identifier of the second callee. The notification message is sent, e.g., from the network unit, to the first callee for notifying the first callee about an identity of the caller or about the identity of the caller and an identity of the second callee. For instance, the first callee is displayed the identifier of the caller. Therefore, the first callee knows who is calling and can decide on the basis of this knowledge if he wants to have access to the communication set up between the caller and the second callee.

Preferably, the first callee sends an indication message to indicate that the first callee's accepts the access offer, Preferably, the indication message is received by the network unit. Initiated by the receipt of the indication message, a mirror session is created, preferably by the network unit, in a context of the first callee. This mirror session represents a copy of the communication session set up between the caller and the second callee. Data associated with the mirror session are provided to the first callee. Thus, the first callee has access to the communication set up between the caller and the second callee.

Preferably, the mirror session is provided by implementation of a mechanism to generate so-called "grey" sessions. These "grey" sessions are created in the same manner as the real communication sessions in the context of the involved users. The grey session is a representation of a remote session, it contains the participants and media used. It is known as "grey" as long as the first callee, i.e., the supervisor of the on-going communication, has engaged no media there, i.e., has contributed no media to the on-going communication.

Preferably, the network unit communicates with a terminal associated with the first callee by using a dialogue protocol. The dialogue is only between the network unit and the user application of the first callee (e.g., a softphone), Preferably, it uses an API (= Application Programming Interface). The user application could be located in the terminal (IP phone, GSM, PDA, ...), but the user application always maintains the dialogue through the API (web services, socket services, ...) (IP = Internet Protocol; GSM = Global System for Mobile Communications; PDA = Personal Digital Assistant). Examples for session API are: Create(), Delete(), End(), Merge(), View(), Subscribe(), Join(), Spy(), SetVisible(), GetVisible(), Record(), etc.

It so also possible that the control unit of the network unit is implemented in a telephone exchange of the telecommunications network. Especially, if the telecommunications network is a PSTN or a ISDN network, the function of the control unit may be provided by a telephone exchange (PSTN = Public Switched Telephone Network; ISDN = Integrated Service Digital Network).

It so also possible that the control unit of the network unit is implemented in a call control centre of the telecommunications network. Especially, if the telecommunications network is a packet-based network and the communication session is executed on the basis of data packets, the function of the control unit may be provided by a call control centre, e.g., a SIP server.

These as well as further features and advantages of the invention will be better appreciated by reading the following detailed description of presently preferred exemplary embodiments taken in conjunction with accompanying drawings of which:
- Fig. 1: is a block diagram of a telecommunications network according to an embodiment of the invention;
- Fig. 2: is a message flow diagram according to another embodiment of the invention

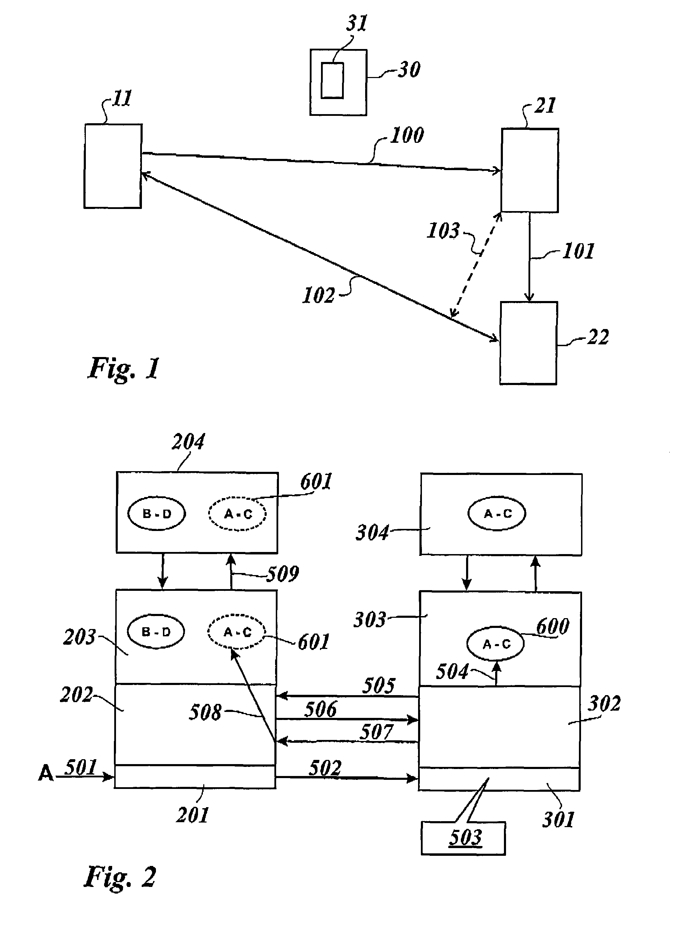

Fig. 1 shows a caller 11 who initiates a call 100 to a first callee 21. For simplicity reasons, when referring to a caller or a callee in the following, it is implied that the caller and the callee uses a terminal to execute an action like receiving, forwarding or sending a telecommunication message without explicit mention of the terminal. The first callee 21 has activated an automatic call forwarding of incoming calls which works when the first callee 21 is busy, e.g., talking on his terminal. The first callee 21 has set the call forwarding to forward incoming calls to the second callee 22.

The caller 11, the first callee 21, and the second callee 22 are subscribed to a telecommunications network, e.g., a PSTN or a packet-based network. The terminals used by the caller 11, the first callee 21, and the second callee 22 for telecommunication may be wireline and/or wireless terminals, e.g., a telephone set, a mobile phone, a computer operated as a softphone, etc.

The network comprises a network unit 30 for control of the improved call forwarding according to the invention. The network unit 30 is composed of one or several interlinked computers, i.e., a hardware platform, a software platform basing on the hardware platform and several application programs executed by the system platform formed by the software and hardware platform. The functionalities of the network unit 30 are provided by the execution of these application programs. The application programs or a selected part of these application programs constitute a computer software product providing a call forwarding control service as described in the following, when executed on the system platform. Further, such computer software product is constituted by a storage medium storing these application programs or said selected part of application programs. From a functional point of view, the network unit 30 comprises a control unit 31, e.g., a PCU adapted to execute and control the functions of the network unit 30 (CPU = central processing unit).

When the call 100 from the caller 11 arrives at the first callee 21, the first callee 21 is busy and the call 100 is forwarded 101 to the second callee 22. The second callee 22 is notified about the incoming call and responds to the call from the caller 11.

As soon as the second callee 22 answers the call, a function of the control unit 31 associated with the second callee 22 analyses the call message. The control unit 31 associated with the second callee 22 extracts information about the first callee 21 from the call message and retrieves contact data associated with the first callee 21 (e.g., a SIP address).

Next, the function of the control unit 31 associated with the second callee 22 informs the first callee 21 about the call and proposes to the first callee 21 to supervise the session 102 between the caller 11 and the second callee 22. The first callee 21 confirms his interest in this session. The second callee 22 sends information about the session 102 caller 11 - second callee 22 to the context of the first callee 21. After that, the second callee 22 subscribes the first callee 21 to any outcome of the session 102 caller 11 - second callee 22.

This way, the first callee 21 sees 103 in his communication application the state of the session 102 caller 11 - second callee 22. The first callee 21 can jump in the session 102 caller 11 - second callee 22, call or create a one-to-one communication with one of the participants 11, 22 of the session 102.

In Fig. 2, a user A initiates a call by triggering a terminal used by the user A to send a call message 501 to a terminal used by a user B. For simplicity reasons, when referring to a user in the following, it is implied that the user uses a terminal to execute an action like receiving, forwarding or sending a telecommunication message without explicit mention of the terminal. The user B has activated an automatic call forwarding to a user C. The user B has adjusted the settings of the automatic call forwarding so that a call coming in to the user B is automatically forwarded to the user C if the user B is busy, i.e., engaged in an on-going telecommunication on his terminal.

Contrary to the embodiment described with reference to Fig. 1, in the embodiment described with reference to Fig. 2 the network does not comprise a stand-alone network unit. Instead, the functions of the network unit are decentrally distributed among the terminals of the caller and the callees. In particular, this can be realised in an effective manner if the terminals used by the caller and the callees are softphones. In this case, it is relatively easy to provide these softphones with a software where the features of the present invention are realised.

The functionality necessary for this solution comprises several elements that are installed on the softphones:
1. A reader for reading the call message. The reader allows to find with the help of the identifier of the user B, i.e., the call-forwarding user, the context of the user B.
2. A sessions engine for session control for the users.
3. A dialogue protocol among the session engines for creating the grey session in the context of the user B, forwarding and/or interested in the call. This creation is initiated by a command "VIEW". This command may be utilised to see a session of another user.
4. A subscription service in the session engine for distant users interested in local sessions.
5. A notification service between the sessions of several users.

The terminals used in the embodiment of Fig. 2 are softphones, e.g., laptops and workstations with a telecommunications software running, and equipped with the necessary equipment such as microphone, loudspeaker, keypad etc.

At the time when the call message 501 originating from the user A arrives at the user B, the user B is busy. Thus, the call message 501 is forwarded as call message 502 to the user C. When the call message 502 arrives at the terminal of the user C, a call notification procedure is set going, e.g., an acoustic signal is replayed by the terminal of the user C. Notified by the call notification procedure, the user C answers the incoming call 502. As soon as the user C answers the call, the message analyser 301 of the user C performs an analysis 503 on the forwarded call message 502 and extracts information that the call message 501, 502 was originally targeted to the user B. Furthermore, the message analyser 301 retrieves a location of a context 203 of the user B. Preferably, the message analyser 301 retrieves contact data associated with the user B (e.g., a SIP address).

After the user C has answered the call 502, the sessions engine 302 builds 504 a session A-C, i,e., a session of the user A with the user C. The sessions engine 302 informs 505 the context 203 of the user B that a session 600 concerning the user B can be supervised.

The context 203 of the user B confirms the user B's interest in that session by sending a command "VIEW" 506 to the context 303 of the user C. The context 303 of the user C subscribes the context 203 of the user B to that session 600.

The notifications about the session A-C and its evolution are sent 507 to the context 203 of the user B. The grey session 601 is created 508 in the context 203 of the user B.

On account of this, the softphone 204 of the user B receives this new session 601 and can present it to the user B. The user B can intervene into this session if he wishes to. The user B may call one or the other participant of the session A-C, or both participants.

## Claims

1. A method of providing an improved call forwarding service in a telecommunications network, wherein a call (100) initiated by a caller (11) to a first callee (21) is forwarded (101) from the first callee (21) to a second callee (22) for set-up of a communication session (102) between the caller (11) and the second callee (22),
**characterised in**
**that** the method comprises the steps of:
after answering the forwarded call (101) by the second callee (22), analysing the forwarded call (101) and extracting data associated with the call (100);
based on the extracted data, sending a notification message about the call (100) to the first callee (21);
executing a procedure for offering the first callee (21) an access (103) to the communication session (102) set up between the caller (11) and the second callee (22); and
if the first callee (21) accepts the offered access (103) to the communication session (102), granting the first callee (21) the access (103) to the communication session (102).

2. The method of claim 1,
**characterised in**
**that** the method further comprises the step of:
granting the first callee (21) the access (103) to the communication session (102) by providing the first callee (21) with a possibility to supervise the communication session (102) and/or to establish a connection to the caller (11) and/or to the second callee (22).

3. The method of claim 1,
**characterised in**
**that** the method further comprises the steps of:
extracting, from a call message associated with the call (100), an identifier of the first callee (21) and retrieving contact data associated with the first callee (21);
using the contact data to address the notification message to the first callee (21), the notification message comprising an identifier of the caller (11) or comprising the identifier of the caller (11) and an identifier of the second callee (22); and
sending the notification message to the first callee (21) for notifying the first callee (21) about an identity of the caller (11) or about the identity of the caller (11) and an identity of the second callee (22).

4. The method of claim 3,
**characterised in**
**that** the method further comprises the step of:
extracting the contact data associated with the first callee (21) from the call message or retrieving, based on the identifier of the first callee (21), the contact data associated with the first callee (21) from a data base.

5. The method of claim 1,
**characterised in**
**that** the method further comprises the steps of:
receiving an indication message from the first callee (21), the indication message indicating the first callee's (21) acceptance of the access offer;
triggered by said indication message, creating a mirror session in a context of the first callee (21), the mirror session constituting a copy of the communication session (102) set up between the caller (11) and the second callee (22); and
indicating data associated with the mirror session to the first callee (21).

6. A network unit (30) for providing an improved call forwarding service in a telecommunications network, wherein a call (100) initiated by a caller (11) to a first callee (21) is forwarded (101) from the first callee (21) to a second callee (22) for set-up of a communication session (102) between the caller (11) and the second callee (22),
**characterised in**
**that** the network unit (30) comprises a control unit (31) adapted to analyse, after answering the forwarded call (101) by the second callee (22), the forwarded call (101) and extract data associated with the call (100);
send, based on the extracted data, a notification message about the call (100) to the first callee (21);
execute a procedure for offering the first callee (21) an access (103) to the communication session (102) set up between the caller (11) and the second callee (22); and
if the first callee (21) accepts the offered access (103) to the communication session (102), grant the first callee (21) the access (103) to the communication session (102).

7. The network unit (30) of claim 6,
**characterised in**
**that** the control unit (31) is further adapted to communicate with a terminal associated with the first callee (21) on the basis of a dialogue protocol.

8. The network unit (30) of claim 6,
**characterised in**
**that** the control unit (31) is implemented in a telephone exchange of the telecommunications network.

9. The network unit (30) of claim 6,
**characterised in**
**that** the control unit is implemented in a call control centre of the telecommunications network.

10. A computer program product for providing an improved call forwarding service in a telecommunications network, wherein a call (100) initiated by a caller (11) to a first callee (21) is forwarded (101) from the first callee (21) to a second callee (22) for set-up of a communication session (102) between the caller (11) and the second callee (22),
**characterised in**
**that** the computer program product, when executed by a network unit (30), performs the steps of:
after answering the forwarded call (101) by the second callee (22), analysing the forwarded call (101) and extracting data associated with the call (100);
based on the extracted data, initiating the sending of a notification message about the call (100) to the first callee (21);
triggering the execution of a procedure for offering the first callee (21) an access (103) to the communication session (102) set up between the caller (11) and the second callee (22); and
if the first callee (21) accepts the offered access (103) to the communication session (102), granting the first callee (21) the access (103) to the communication session (102).
